# EUROPEAN PATENT APPLICATION

(11) **EP 2 827 422 A1**
(43) Date of publication of application: **21.01.2015**
(21) Application number: 13761050.7
(22) Date of filing: 12.03.2013
(51) Int. Cl.: H01M 8/04, H01M 8/00, H01M 8/10

(54) **FUEL CELL SYSTEM**

(30) Priority: 13.03.2012 JP 2012056362
(71) Applicant: Nissan Motor Co., Ltd, Yokohama-shi, Kanagawa 221-0023 (JP)
(72) Inventor: FUJII, Takahiro, Atsugi-shi Kanagawa 243-0123 (JP); ISHIKAWA, Tatsuro, Atsugi-shi Kanagawa 243-0123 (JP); ICHIKAWA, Yasushi, Atsugi-shi Kanagawa 243-0123 (JP); IKEZOE, Keigo, Atsugi-shi Kanagawa 243-0123 (JP)
(74) Representative: Grünecker, Kinkeldey, Stockmair & Schwanhäusser
(86) International application number: PCT/JP2013/056862
(87) International publication number: WO 2013/137275

(57) **Abstract**

A fuel cell system includes a control valve configured to control a pressure of the anode gas supplied to the fuel cell, the power controller electrically connected to the fuel cell and configured to control an output of the fuel cell based on a power generation required amount for the fuel cell, a pulsation operation control unit configured to increase a pressure of the anode gas downstream of the control valve in accordance with the power generation required amount for the fuel cell and to increase and decrease the pressure of the anode gas periodically, and an output limiting unit configured to limit an output of the fuel cell set by the power controller when the power generation required amount for the fuel cell decreases.

## Description

### TECHNICAL FIELD

The present invention relates to a fuel cell system.

### BACKGROUND ART

JP 2007-517369 A discloses a related-art fuel cell system including a normally-closed solenoid valve provided on an anode gas supply passage, and a normally-open solenoid valve and a buffer tank (recycle tank) provided on an anode gas discharge passage in this order from an upstream side.

The related-art fuel cell system is a fuel cell system of an anode gas non-circulation type, and applies a pulsation operation of increasing/decreasing a pressure of the anode gas, thereby pushing impurities generated in a power generation area in a fuel cell into the downstream buffer tank and suppressing a decrease in hydrogen concentration in the power generation area.

### SUMMARY OF INVENTION

When a power generation required amount for the fuel cell decreases in the fuel cell system for carrying out the pulsation operation, a state where the pressure of the anode gas is high is changed to a low target pressure corresponding to the decrease in the power generation required amount. A rate of the pressure decrease on this occasion depends on a power consumption, and it has been found out that when the pressure decrease rate is high, the impurities generated in the power generation area in the fuel cell cannot sufficiently be pushed into the downstream buffer tank, and the decrease in hydrogen concentration in the power generation area cannot be suppressed.

This invention has been made in view of the above-mentioned problem, and therefore has an object to decrease the pressure decrease rate when the power generation required amount for the fuel cell decreases, thereby surely suppressing the decrease in hydrogen concentration in the power generation areas.

According to one aspect of this invention, there is provided a fuel cell system for supplying a fuel cell with an anode gas and a cathode gas, and generating electric power in response to control performed by a power controller. The fuel cell system includes a control valve configured to control a pressure of the anode gas supplied to the fuel cell, the power controller electrically connected to the fuel cell and configured to control an output of the fuel cell based on a power generation required amount for the fuel cell, a pulsation operation control unit configured to increase a pressure of the anode gas downstream of the control valve in accordance with the power generation required amount for the fuel cell and to increase and decrease the pressure of the anode gas periodically, and an output limiting unit configured to limit an output of the fuel cell set by the power controller when the power generation required amount for the fuel cell decreases.

Embodiments and advantages of the present invention will be described in detail below with reference to the attached figures.

### BRIEF DESCRIPTION OF DRAWINGS

FIG. 1A is a schematic perspective view of a fuel cell according to one embodiment of the present invention.
FIG. 1B is a cross sectional view of the fuel cell of FIG. 1A taken along the line IB-IB.
FIG. 2 is a schematic diagram of a fuel cell system of an anode gas non-circulation type according to one embodiment of the present invention.
FIG. 3 is a graph showing a pulsation operation during a steady operation.
FIG. 4 is a graph showing the pulsation operation during a downward transition operation.
FIG. 5 is a flowchart illustrating pulsation operation control according to one embodiment of the present invention.
FIG. 6 is a flowchart illustrating normal operation processing.
FIG. 7 is a flowchart illustrating downward transition operation processing.
FIG. 8 is a table for calculating an output current upper limit value for a fuel cell stack based on an anode pressure decrease amount.

### DESCRIPTION OF EMBODIMENTS

A fuel cell is configured by sandwiching an electrolyte membrane between an anode electrode (fuel electrode) and a cathode electrode (oxidizing agent electrode). The fuel cell generates electric power by supplying the anode electrode with an anode gas (fuel gas) containing hydrogen and supplying the cathode electrode with a cathode gas (oxidizing agent gas) containing oxygen. Electrode reactions progressing on both the anode electrode and the cathode electrode are as follows.

Anode electrode: 2H₂→4H⁺+4e⁻ (1)

Cathode electrode: 4H⁺+4e⁻+O₂→2H₂O (2)

As a result of the electrode reactions represented as (1) and (2), the fuel cell generates an electromotive force of approximately one volt.

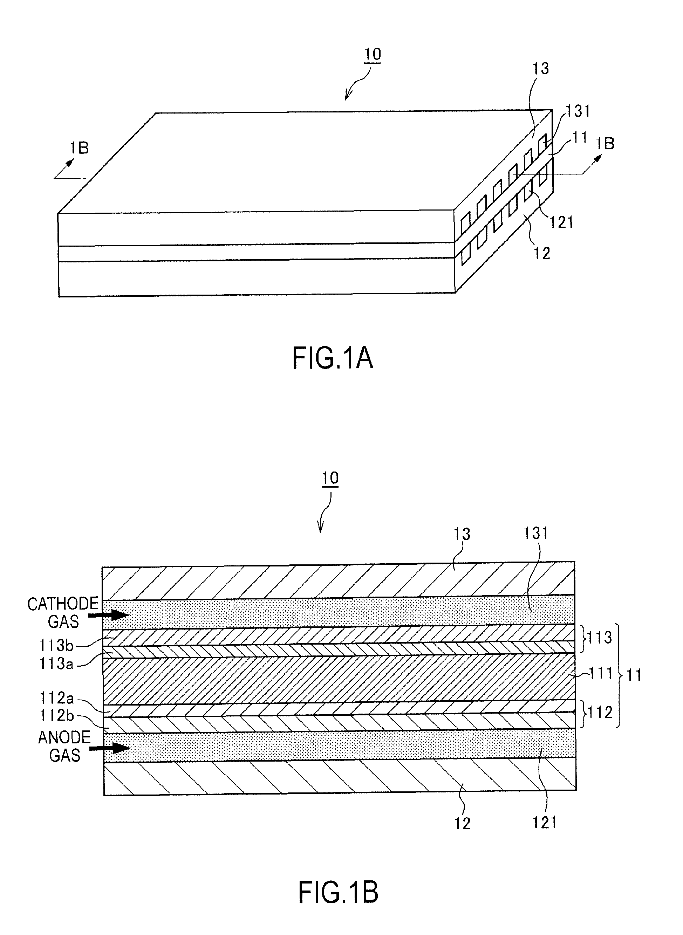

FIGS. 1A and 1B are diagrams illustrating a configuration of a fuel cell 10 according to one embodiment of the present invention. FIG. 1A is a schematic perspective view of the fuel cell 10. FIG. 1B is a cross sectional view of the fuel cell 10 of FIG. 1A taken along the line IB-IB.

The fuel cell 10 is configured by arranging an anode separator 12 and a cathode separator 13 on both front and rear surfaces of a membrane electrode assembly (hereinafter referred to as "MEA") 11.

The MEA 11 includes an electrolyte membrane 111, an anode electrode 112, and a cathode electrode 113. The MEA 11 includes the anode electrode 112 on one surface of the electrolyte membrane 111, and the cathode electrode 113 on the other surface thereof.

The electrolyte membrane 111 is a proton conductive ion-exchange membrane formed by a fluorine-based resin. The electrolyte membrane 111 presents an excellent electric conductivity in a wet state.

The anode electrode 112 includes a catalyst layer 112a and a gas diffusion layer 112b. The catalyst layer 112a is in contact with the electrolyte membrane 111. The catalyst layer 112a is formed by platinum or carbon black particles carrying platinum and the like. The gas diffusion layer 112b is provided on an outside (an opposite side of the electrolyte membrane 111) of the catalyst layer 112a, and is in contact with the anode separator 12. The gas diffusion layer 112b is formed by a member having sufficient gas diffusion property and electric conductivity, and is formed by, for example, a carbon cloth woven by yarns formed by carbon fibers.

The cathode electrode 113 includes a catalyst layer 113a and a gas diffusion layer 113b similarly to the anode electrode 112.

The anode separator 12 is in contact with the gas diffusion layer 112b. The anode separator 12 includes a plurality of groove-shaped anode gas flow passages 121 on the side in contact with the gas diffusion layer 112b for supplying the anode electrode 112 with the anode gas.

The cathode separator 13 is in contact with the gas diffusion layer 113b. The cathode separator 13 includes a plurality of groove-shaped cathode gas flow passages 131 on the side in contact with the gas diffusion layer 113b for supplying the cathode electrode 113 with the cathode gas.

The anode gas flowing through the anode gas flow passages 121 and the cathode gas flowing through the cathode gas flow passages 131 flow in parallel with each other and in the same direction. The anode gas and the cathode gas may flow in parallel with each other and in directions opposite to each other.

When the fuel cell 10 is used as a power source for a vehicle, required electric power is large, and hence the fuel cells 10 are used as a fuel cell stack constructed by stacking some hundreds of fuel cells. Then, a fuel cell system for supplying the fuel cell stack with the anode gas and the cathode gas is constructed to extract the electric power for driving the vehicle.

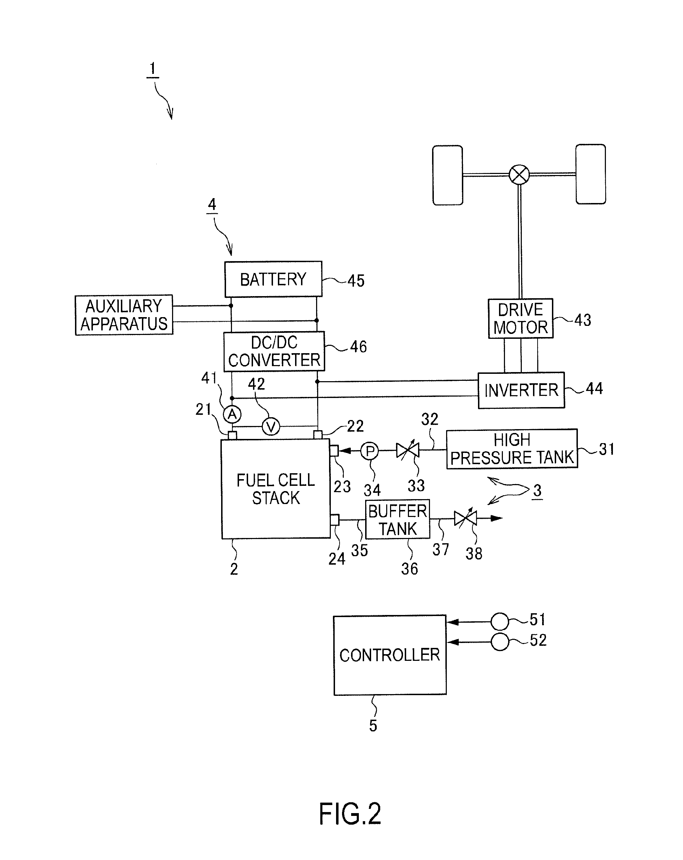

FIG. 2 is a schematic configuration diagram of a fuel cell system 1 of an anode gas non-circulation type according to one embodiment of this invention.

The fuel cell system 1 includes a fuel cell stack 2, an anode gas supply apparatus 3, a power system 4, and a controller 5.

The fuel cell stack 2 is constructed by stacking some hundreds of the fuel cells 10, and receives the supply of the anode gas and the cathode gas to generate the electric power required to drive the vehicle. The fuel cell stack 2 includes an anode electrode side output terminal 21 and a cathode electrode side output terminal 22 as terminals for extracting the electric power.

A cathode gas supply / discharge apparatus for supplying / discharging the cathode gas to / from the fuel cell stack 2 and a cooling apparatus for cooling the fuel cell stack 2 are not principal parts of the present invention, and are thus not illustrated for promoting understanding. This embodiment uses the air as the cathode gas.

The anode gas supply apparatus 3 includes a high pressure tank 31, an anode gas supply passage 32, a pressure regulating valve 33, a pressure sensor 34, an anode gas discharge passage 35, a buffer tank 36, a purge passage 37, and a purge valve 38.

The high pressure tank 31 stores the anode gas to be supplied to the fuel cell stack 2 while the anode gas is maintained in a high pressure state.

The anode gas supply passage 32 is a passage for supplying the fuel cell stack 2 with the anode gas discharged from the high pressure tank 31. The anode gas supply passage 32 is connected to the high pressure tank 31 at one end and to an anode gas inlet port 23 of the fuel cell stack 2 at the other end.

The pressure regulating valve 33 is provided in the anode gas supply passage 32. The pressure regulating valve 33 adjusts the anode gas discharged from the high pressure tank 31 to have a desired pressure, and then supplies the fuel cell stack 2 with the anode gas. The pressure regulating valve 33 is an electromagnetic valve capable of adjusting an opening degree continuously or stepwise, and the opening degree thereof is controlled by the controller 54.

The pressure sensor 34 is provided in the anode gas supply passage 32 downstream of the pressure regulating valve 33. The pressure sensor 34 detects a pressure of the anode gas flowing in the anode gas supply passage 32 downstream of the pressure regulating valve 33. In this embodiment, the pressure of the anode gas detected by the pressure sensor 34 is substituted for a pressure (hereinafter referred to as "anode pressure") of the entire anode system including the respective anode gas flow passages 121 inside the fuel cell stack 2 and the buffer tank 36.

The anode gas discharge passage 35 is connected to an anode gas outlet port 24 of the fuel cell stack 2 at one end and to a top part of the buffer tank 36 at the other end. A mixed gas (hereinafter referred to as "anode off-gas") of a surplus anode gas which has not been used for the electrode reaction and inert gases such as nitrogen and water vapor which have been transmitted from the cathode side to the anode gas flow passages 121 is discharged to the anode gas discharge passage 35.

The buffer tank 36 temporarily stores the anode off-gas which has flown through the anode gas discharge passage 35. A part of the water vapor in the anode off-gas is condensed into liquid water in the buffer tank 36, and is thus separated from the anode off-gas.

The purge passage 37 is connected to a bottom part of the buffer tank 36 at one end. The other end of the purge passage 37 forms an open end. The anode off-gas and the liquid water accumulated in the buffer tank 36 are discharged via the purge passage 37 from the open end to the outside air.

The purge valve 38 is provided in the purge passage 37. The purge valve 38 is an electromagnetic valve capable of adjusting an opening degree continuously or stepwise, and the opening degree thereof is controlled by the controller 54. An amount of the anode off-gas discharged from the buffer tank 36 via the purge passage 37 to the outside air is adjusted by adjusting the opening degree of the purge valve 38 so that the anode gas concentration in the buffer tank reaches a desired concentration. When the anode gas concentration in the buffer tank is too low, the anode gas used for the electrode reaction becomes insufficient, resulting in a decrease in power generation efficiency. On the other hand, when the anode gas concentration inside the buffer tank is too high, the amount of the anode gas discharged via the purge passage 37 along with the inert gases in the anode off-gas increases, resulting in an increase in fuel consumption. Thus, the anode gas concentration in the buffer tank is controlled to an appropriate value by taking the power generation efficiency and the fuel consumption into consideration. When the operation state of the fuel cell system 1 is the same, as the opening degree of the purge valve 38 becomes larger, the concentration of the inert gases in the buffer tank 36 becomes lower, and the anode gas concentration becomes higher.

The power system 4 includes a current sensor 41, a voltage sensor 42, a drive motor 43, an inverter 44, a battery 45, and a DC/DC converter 46.

The current sensor 41 detects a current (hereinafter referred to as "output current") extracted from the fuel cell stack 2.

The voltage sensor 42 detects an inter-terminal voltage (hereinafter referred to as "output voltage") between the anode electrode side output terminal 11 and the cathode electrode side output terminal 12.

The drive motor 43 is a three-phase AC synchronous motor constituted by embedding permanent magnets in a rotor and winding stator coils around a stator. The drive motor 43 has a function as a motor of receiving the supply of the power from the fuel cell stack 2 and the battery 45, thereby rotating for driving, and a function as a generator of generating an electromotive force between both ends of a stator coil when the vehicle is decelerating where the rotor is rotated by an external force.

The inverter 44 is constituted by a plurality of semiconductor switches such as insulated gate bipolar transistors (IGBTs). The semiconductor switches of the inverter 44 are controlled to open / close by the controller 5, and DC power is converted into AC power, or AC power is converted into DC power. When the drive motor 43 is controlled to function as the motor, the inverter 44 converts combined DC power of electric power generated by the fuel cell stack 2 and electric power output from the battery 45 into three-phase AC power, and supplies the drive motor 43 with the AC power. On the other hand, when the drive motor 43 is controlled to function as the generator, the inverter 44 converts regenerative electric power (three-phase AC power) of the drive motor 43 into DC power, and supplies the battery 45 with the DC power.

The battery 45 is a rechargeable battery which can be charged and discharged. The battery 45 is charged by a surplus amount of the output power (output current x output voltage) of the fuel cell stack 2 and the regenerative power of the drive motor 43. The electric power charged in the battery 45 is supplied to various auxiliary apparatus (such as a compressor for pressure-feeding the cathode gas to the fuel cell stack 2) and the drive motor 43 depending on necessity.

The DC/DC converter 46 is a bidirectional voltage converter for stepping up/down the output voltage of the fuel cell stack 2. The output current, and further the output power, of the fuel cell stack 2 are controlled by controlling the output voltage of the fuel cell stack 2 by the DC/DC converter 46.

The controller 5 is constructed by a microcomputer including a central processing unit (CPU), a read-only memory (ROM), a random access memory (RAM), and an input/output interface (I/O interface). Signals from various sensors necessary for controlling the fuel cell system 1 is input into the controller 5. Various sensors include the pressure sensor 34, the current sensor 41, and the voltage sensor 42 as well as an accelerator stroke sensor 51 for detecting a depressed amount (hereinafter referred to as "accelerator operation amount") of an accelerator pedal, and an SOC sensor 52 for detecting a charged amount of the battery 45.

The controller 5 periodically opens/closes the pressure regulating valve 33 based on those input signals, carries out the pulsation operation control of periodically increasing/ decreasing the anode pressure, and adjusts the opening degree of the purge valve 38 to adjust the flow rate of the anode off-gas discharged from the buffer tank 36, thereby carrying out purge control of maintaining the anode gas concentration inside the buffer tank 36 to a desired concentration.

If the pressure regulating valve 33 is maintained in an open state to keep the supply of the anode gas from the high pressure tank 31 to the fuel cell stack 2 in the fuel cell system 1 of the anode gas non-circulation type, an anode off-gas containing the unused anode gas discharged from the fuel cell stack 2 is continuously discharged from the buffer tank 36 via the purge passage 37 to the outside air, which is wasteful.

Thus, in this embodiment, the pulsation operation of periodically opening/closing the pressure regulating valve 33 to periodically increase/decrease the anode pressure is carried out. The pulsation operation can control the anode off-gas accumulated in the buffer tank 36 to flow backward to the fuel cell stack 2 when the anode pressure is decreased. As a result, the anode gas in the anode off-gas can be reused, and hence an anode gas amount discharged to the outside air can be reduced to eliminate the waste.

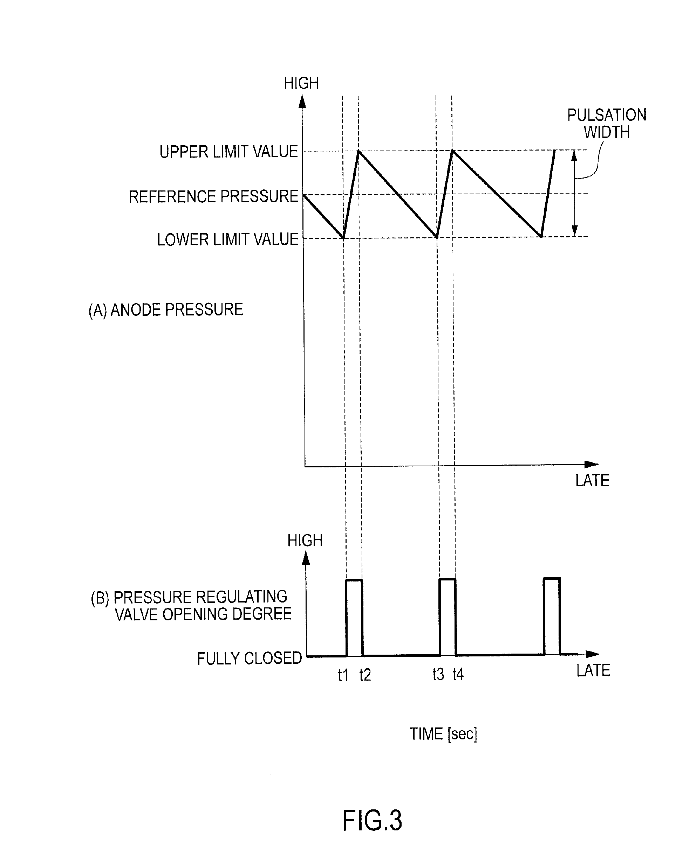

Referring to FIG. 3, while a description is now given of the pulsation operation, a description is given of a reason for the backward flow of the anode off-gas accumulated in the buffer tank 36 to the fuel cell stack 2 when the anode pressure is decreased.

FIG. 3 is a graph showing the pulsation operation during a steady operation where an operation state of the fuel cell system 1 is constant.

As shown in part (A) of FIG. 3, the controller 5 calculates a reference pressure and a pulsation width of the anode pressure based on target output power of the fuel cell stack 2, and sets an upper limit value and a lower limit value of the anode pressure. Then, the controller 5 periodically increases/decreases the anode pressure in the range of the pulsation width centered around the reference pressure. In other words, the controller 5 periodically increases/decreases the anode pressure between the set upper limit value and lower limit value of the anode pressure.

When the anode pressure reaches the lower limit value at a time *t1,* as shown in part (B) of FIG. 3, feedback control is applied to the opening degree of the pressure regulating valve 33 so that the anode pressure reaches a target upper limit value. As a result, as shown in part (A) of FIG. 3, the anode pressure increases from the lower limit value toward the upper limit value. In this state, the anode gas is supplied from the high pressure tank 31 to the fuel cell stack 2, and is discharged to the buffer tank 36.

When the anode pressure reaches the upper limit value at a time t2, as shown in part (B) of FIG. 3, feedback control is applied to the opening degree of the pressure regulating valve 33 so that the anode pressure reaches the lower limit value. As a result of the feedback control, the opening degree of the pressure regulating valve 33 is usually fully closed, and the supply of the anode gas from the high pressure tank 31 to the fuel cell stack 2 is stopped. Then, the electrode reaction (1) described above consumes the anode gas left in the anode gas flow passages 121 inside the fuel cell stack 2 as the time elapses, and the anode pressure thus decreases by the consumed amount of the anode gas.

Moreover, when the anode gas left in the anode gas flow passages 121 is consumed, the pressure in the buffer tank 36 temporarily becomes higher than the pressure in the anode gas flow passages 121, and the anode off-gas flows backward from the buffer tank 36 to the anode gas flow passages 121. As a result, the anode gas left in the anode gas flow passages 121 and the anode gas in the anode off-gas that has flown backward to the anode gas flow passages 121 are consumed as the time elapses, and the anode pressure further decreases.

When the anode pressure reaches the lower limit value at a time *t3*, the pressure regulating valve 33 is opened similarly to the case at the time *t1.* Then, when the anode pressure again reaches the upper limit value at a time t4, the pressure regulating valve 33 is fully closed.

It has been found out that when the pulsation operation is carried out, the following problem occurs during a downward transition operation after the target output power of the fuel cell stack 2 is decreased.

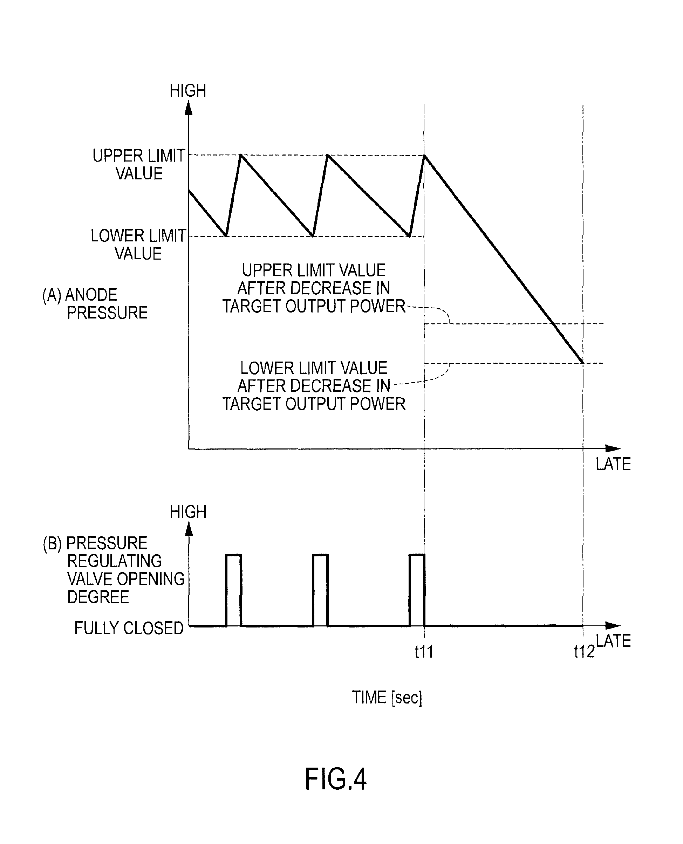

FIG. 4 is a graph showing the pulsation operation during the downward transition operation.

For example, when an accelerator operation amount decreases and the target output power of the fuel cell stack 2 decreases at a time *t11,* an upper limit value and a lower limit value of the anode pressure are newly set in correspondence to the decreased target output power. Then, the pressure regulating valve 33 is fully closed so as to decrease the anode pressure to the newly set lower limit value.

On this occasion, as shown in FIG. 4, a decrease amount in anode pressure during the downward transition operation is larger than that in the steady operation.

As described above, in the pulsation operation, the anode pressure is decreased by fully closing the pressure regulating valve 33 to stop the supply of the anode gas to the fuel cell stack 2 and by consuming the anode gas in the anode gas flow passages 121. Inert gases are transmitted from the cathode gas flow passages 131 to the anode gas flow passages 121 even during the decrease in anode pressure. Thus, a decrease amount in anode gas concentration in the anode gas flow passages 121 is also larger than that in the steady operation during the downward transition operation where the decrease amount in anode pressure is large.

On this occasion, when a consumption rate of the anode gas is fast in the anode gas flow passages 121, a pressure difference between insides of the anode gas flow passages 121 and an inside of the buffer tank immediately increases, and a large amount of the anode off-gas flows backward from the buffer tank 36 to the anode gas flow passages 121. On the other hand, when the consumption rate of the anode gas is high in the anode gas flow passages 121, a decrease rate of the anode pressure also increases, and an application period of the purge control also decreases during the decrease in anode pressure. Therefore, the anode off-gas, which has relatively low anode gas concentration, flows backward from the buffer tank 36.

In other words, when the consumption rate of the anode gas is fast in the anode gas flow passages 121 during the downward transition operation, the anode off-gas relatively low in anode gas concentration further flows backward to the portions at which the anode gas concentration decreases as a result of the consumption of the anode gas. As a result, the anode gas concentration particularly decreases in downstream areas of the anode gas flow passages to which the anode-off gas flows backward, and the electrode reactions are interfered. Thus, the fuel cell 10 can be deteriorated.

Then, according to this embodiment, the amount of power generated by the fuel cells tack 2 is limited during the downward transition operation. As a result, the consumption rate of the anode gas can be decreased in the anode gas flow passages 121. As a result, the application period of the purge control can be increased during the decrease in anode pressure, and the anode gas concentration of the anode off-gas in the buffer tank 36 can be increased to be relatively high. Moreover, the pressure in the buffer tank 36 is also decreased by the purge control, and the anode off-gas flow rate flowing backward from the buffer tank 36 can be suppressed. As a result, the decrease in anode gas concentration in the anode gas flow passage downstream areas can be suppressed, and the degradation of the fuel cell 10 can thus be suppressed.

A description is now given of the pulsation operation control according to this embodiment.

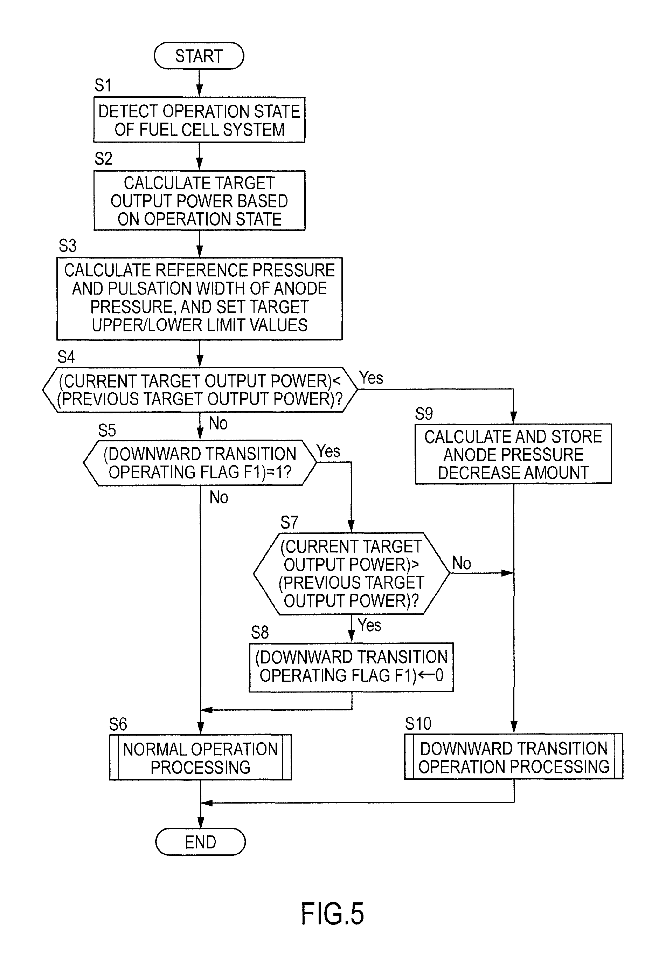

FIG. 5 is a flowchart illustrating the pulsation operation control according to one embodiment of the present invention.

In Step S1, the controller 5 reads detection values of the various sensors, thereby detecting the operation state of the fuel cell system 1.

In Step S2, the controller 5 calculates the target output power of the fuel cell stack 2 based on the operation state of the fuel cell system 1. The target output power basically increases as the accelerator operation amount increases.

In Step S3, the controller 5 calculates the reference pressure and the pulsation width of the anode pressure for the pulsation operation performed at the target output power based on the target output power of the fuel cell stack 2, and sets the upper limit value and the lower limit value of the anode pressure. The reference pressure and the pulsation width of the anode pressure increase as the target output power increases.

In Step S4, the controller 5 determines whether the target output power calculated for this time is smaller than target output power calculated for the previous time. When the target output power calculated for this time is smaller than the target output power calculated for the previous time, the controller 5 carries out processing of Step S8, and otherwise, the controller 5 carries out processing of Step S5.

In Step S5, the controller 5 determines whether a downward transition operating flag *F1* is set to 1 or not. The downward transition operating flag *F1* is set to 1 until the anode pressure reaches the lower limit value during the downward transition operation, and is initialized to 0. When the downward transition operating flag *F1* is 1, the controller 5 carries out processing of Step S7, and otherwise, the controller 5 carries out processing of Step S6.

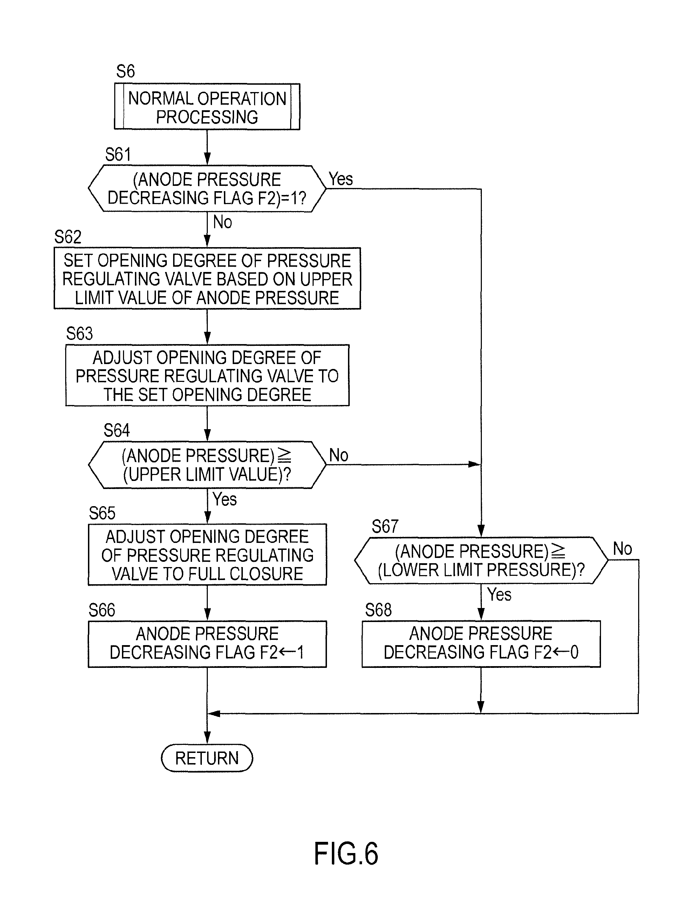

In Step S6, the controller 5 carries out normal operation processing. Referring to FIG. 6, a detailed description is later given of the normal operation processing.

In Step S7, the controller 5 determines whether the target output power calculated for this time is larger than the target output power calculated for the previous time. In other words, the controller 5 determines whether the accelerator pedal has been depressed or not during the downward transition operation. When the target output power calculated for this time is larger than the target output power calculated for the previous time, the controller 5 carries out processing of Step S8, and otherwise, the controller 5 carries out processing of Step S10.

In Step S8, the controller 5 sets the downward transition operating flag *F1* to 0.

In Step S9, the controller 5 calculates and stores a difference (hereinafter referred to as "anode pressure decrease amount") between the reference pressure of the anode pressure calculated for the previous time and the reference pressure of the anode pressure calculated for this time.

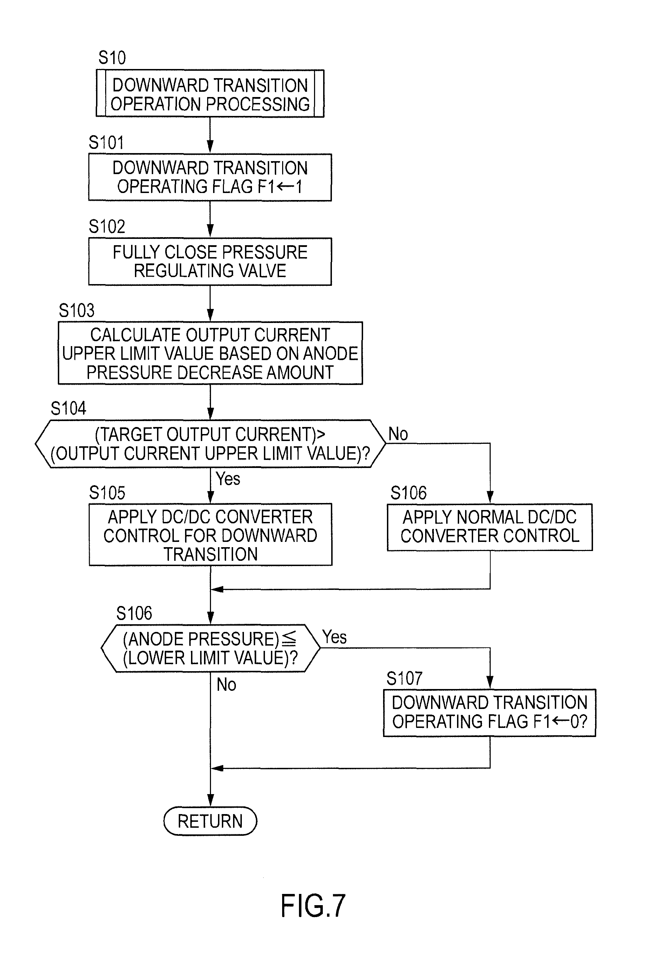

In Step S10, the controller 5 carries out downward transition operation processing. Referring to FIG. 7, a detailed description is later given of the downward transition operation processing.

FIG. 6 is a flowchart illustrating the normal operation processing.

In Step S61, the controller 5 determines whether an anode pressure decreasing flag *F2* is set to 1 or not. The anode pressure decreasing flag *F2* is initialized to 0, and is set to 1 after the anode pressure reaches the upper limit value until the anode pressure decreases to the lower limit value. When the anode pressure decreasing flag *F2* is set to 0, the controller 5 carries out processing of Step S62. On the other hand, if the anode pressure decreasing flag *F2* is set to 1, the controller 5 carries out processing of Step S67.

In Step S62, the controller 5 sets the opening degree of the pressure regulating valve 33 so as to increase the anode pressure at least to the upper limit value based on the upper limit value of the anode pressure.

In Step S63, the controller 5 opens the pressure regulating valve 33 to the opening degree set in Step S72.

In Step S64, the controller 5 determines whether the anode pressure has become equal to or more than the upper limit value or not. When the anode pressure is equal to or more than the upper limit value, the controller 5 carries out processing of Step S65. On the other hand, when the anode pressure is less than the upper limit value, the controller 5 carries out processing of Step S67.

In Step S65, the controller 5 fully closes the pressure regulating valve 33.

In Step S66, the controller 5 sets the anode pressure decreasing flag *F2* to 1.

In Step S67, the controller 5 determines whether the anode pressure has become equal to or less than the lower limit value or not. When the anode pressure is equal to or less than the lower limit value, the controller 5 carries out processing of Step S68. On the other hand, when the anode pressure is more than the lower limit value, the controller 5 finishes the processing for this time.

In Step S68, the controller 5 sets the anode pressure decreasing flag *F2* to 0.

FIG. 7 is a flowchart illustrating the downward transition operation processing.

In Step S101, the controller 5 sets the downward transition operating flag to 1.

In Step S102, the controller 5 fully closes the pressure regulating valve 33.

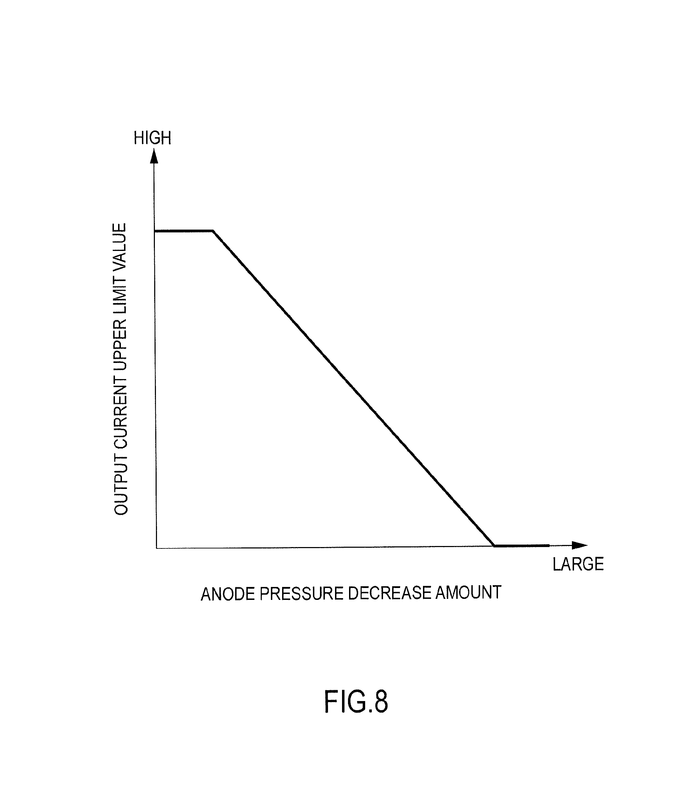

In Step S103, the controller 5 refers to a table of FIG. 8 to calculate an upper limit value of the output current (hereinafter referred to as "output current upper limit value") of the fuel cell stack 2 based on the anode pressure decrease amount.

In Step S104, the controller 5 determines whether a target output current uniquely determined from the target output power depending on a current-voltage characteristic (I-V characteristic) of the fuel cell stack 2 is more than the output current upper limit value of the fuel cell stack 2. When the target output current is more than the output current upper limit value, the controller carries out processing of Step S105. On the other hand, when the target output current is equal to or less than the output current upper limit value, the controller 5 carries out processing of S106.

In Step S105, the controller 5 controls the DC/DC converter 46 so that an insufficient amount of the current is compensated by the battery 45.

In Step S106, the controller 5 normally controls the DC/DC converter 46. In other words, the controller 5 controls the DC/DC converter 46 so that the battery 45 is charged by surplus power of the fuel cell stack 2.

In Step S107, the controller 5 determines whether the anode pressure has reached the lower limit value or not. When the anode pressure has reached the lower limit value, the controller 5 carries out processing of Step S106, and otherwise, the controller 5 finishes the processing for this time.

In Step S108, the controller 5 sets the downward transition operating flag *F1* to 0.

According to this embodiment described above, during the downward transition operation, as the anode pressure decrease amount increases, the amount of power generated by the fuel cell stack 2 is limited more. In other words, as the anode pressure decrease amount increases, the output current upper limit value of the fuel cell stack 2 is decreased.

With this, the consumption rate of the anode gas in the anode gas flow passages 121 is suppressed during the downward transition operation, and the application period of the purge control can be increased while the anode pressure is decreasing. Therefore, the anode gas concentration of the anode off-gas in the buffer tank 36 can be relatively increased. Moreover, the pressure in the buffer tank 36 is also decreased by the purge control, and the flow rate of the anode off-gas flowing backward from the buffer tank 36 can thus be suppressed.

As a result, the decrease in anode gas concentration in the downstream areas of the anode gas flow passages 121 can be suppressed, and the degradation of the fuel cell 10 can thus be suppressed.

Moreover, as the anode pressure decrease amount increases, the output current upper limit value of the fuel cell stack 2 is decreased, and a power consumption of the battery can thus be suppressed when the anode pressure decrease amount is small, and the degradation of the battery can thus be suppressed.

Moreover, the insufficient amount of the power is compensated by the power of the battery 45, and the target output power can thus be output even when the power generation amount by the fuel cell stack 2 is restricted. Thus, a power performance can be prevented from degrading.

An embodiment of the present invention was described above, but the above embodiment merely illustrates a part of examples of applications of the present invention, and the technical scope of the present invention is not limited to the specific configurations described in the embodiment.

For example, the buffer tank 36 is intentionally provided downstream of the fuel cell stack 2 in the above-mentioned embodiment, but a component such as the buffer tank 36 is not always necessary, and ordinary pipes and an internal manifold in the fuel cell stack 2 may be considered as the buffer tank.

Moreover, this embodiment can be applied to a fuel cell system of an anode gas circulation type, which is not provided with a pump for pressure-feeding and circulating the anode gas.

The present application claims priority based on Japanese Patent

Application No. 2012-56362, filed with the Japan Patent Office on March 13, 2012, the entire contents of which are incorporated into this specification by reference.

## Claims

1. A fuel cell system for supplying a fuel cell with an anode gas and a cathode gas, and generating electric power in response to control performed by a power controller,
the fuel cell system comprising:
a control valve configured to control a pressure of the anode gas supplied to the fuel cell;
the power controller electrically connected to the fuel cell and configured to control an output of the fuel cell based on a power generation required amount for the fuel cell;
a pulsation operation control unit configured to increase a pressure of the anode gas downstream of the control valve in accordance with the power generation required amount for the fuel cell and to increase and decrease the pressure of the anode gas periodically; and
an output limiting unit configured to limit an output of the fuel cell set by the power controller when the power generation required amount for the fuel cell decreases.

2. The fuel cell system according to claim 1, wherein the output limiting unit configured to increase an output limited amount for the fuel cell as a decrease amount of the power generation required amount for the fuel cell increases.

3. The fuel cell system according to claim 1 or 2, further comprising an external load control unit to be connected to an external load and connected to a rechargeable battery via the power controller, for controlling the external load based on a request by a driver,
wherein the output limiting unit adjusts the power controller to limit the output of the fuel cell, thereby outputting, from the rechargeable battery, an insufficient amount of the output of the fuel cell for the external load.
